# EUROPEAN PATENT SPECIFICATION

(11) **EP 3 631 518 B1**
(45) Date of publication and mention of the grant of the patent: **28.04.2021**
(21) Application number: 17729175.4
(22) Date of filing: 24.05.2017
(51) Int. Cl.: G01V 1/00, G01M 15/12, G01M 7/00, F02B 63/04

(54) **METHOD FOR SEISMIC QUALIFICATION OF GENSET COMPONENTS**
VERFAHREN ZUR SEISMISCHEN QUALIFIZIERUNG VON GENSET-KOMPONENTEN
PROCÉDÉ DE QUALIFICATION SISMIQUE DE COMPOSANTS DE GROUPE ÉLECTROGÈNE

(43) Date of publication of application: 08.04.2020
(73) Proprietor: Wärtsilä Finland Oy, 65100 Vaasa (FI)
(72) Inventor: DEGANO, Francesco, 34018 Trieste (IT); PESTELLI, Carlo, 34018 Trieste (IT); ALMERIGOGNA, Moreno, 34018 Trieste (IT)
(74) Representative: Berggren Oy, Helsinki & Oulu
(86) International application number: PCT/FI2017/050392
(87) International publication number: WO 2018/215689

(56) References cited:
- WO-A1-2017/060558
- JP-A- 2007 024 663
- US-A1- 2016 377 500
- "IEEE Recommended Practice for Seismic Design of Substations;IEEE Std 693-1997 ED - Anonymous", IEEE STANDARD; [IEEE STANDARD], IEEE, PISCATAWAY, NJ, USA, 1 January 1998 (1998-01-01), page i, XP017603259, ISBN: 978-0-7381-0234-4

## Description

### Technical field of the invention

The present invention relates to a method for seismic qualification of a component of a piston engine or a component of a genset that comprises a piston engine and a generator coupled to the engine in accordance with claim 1.

### Background of the invention

Internal combustion engines are often used in applications, where reliable running of the engines is highly important, and the engines also need to be operable in extreme conditions, for instance during an earthquake. One example of such a use is nuclear power plants, where internal combustion engines can be used for providing electric power to the critical systems of the power plant, such as cooling systems, during disruptions in the supply of electric power via a power grid. Another example could be hospitals, where internal combustion engines are often used as a secondary power supply to ensure availability of electric power during disturbances in a power grid.

Because of the importance of reliable operation also during and after an earthquake, the earthquake resistance of internal combustion engines that are used in critical applications needs to be qualified. The qualification of engine-generator sets (gensets) can be done either by analyzing or testing the various components of the gensets or by combining these two methods. The problem with simulation or other analysis is that each component of the genset needs to be analyzed separately and detailed 3D models of the components are needed. In addition, qualification by analysis may not be sufficient for assessing how the operability of a component is maintained during an earthquake.

If both the structural integrity and operability of the components after an earthquake need to be qualified, testing is often used. Testing of components is usually done by attaching the components to a shaking table, which can simulate the accelerations during an earthquake. Each component is tested separately, and therefore the components are usually not operated during the tests. The operability during an earthquake thus needs to be ensured by separate analysis.

What is common to most prior art methods of seismic qualification is that the processes are long, complicated, time consuming and expensive.

In patent application publication WO 2017/060558 A1 is disclosed a method for testing earthquake resistance of an internal combustion engine, the method comprising the steps of operating the engine and simultaneously subjecting the engine to at least one excitation, which is not encountered during normal operation of the engine.

In patent application publication US 2016/377500 A1 is disclosed a method for detection of engine component conditions via external sensors, comprising: receiving a plurality of signals representative of an engine noise transmitted via a plurality of noise sensors, wherein the noise sensors are disposed in a grid about an engine; receiving a knock sensor signal representative of an engine noise transmitted via a knock sensor; deriving a combustion event based on the knock sensor signal; deriving an engine condition based on the plurality of signals and the combustion event; and communicating the engine condition.

In patent application publication JP 2007 024663 A is disclosed a method for diagnosing an abnormality capable of contributing to prevention of a derailment accident of rolling stock.

### Summary of the invention

The object of the present invention is to provide an improved method for seismic qualification of a component of a piston engine or a component of a genset that comprises a piston engine and a generator coupled to the engine. The characterizing features of the method according to the invention are given in claim 1.

The method according to the invention comprises the steps of
- determining a Required Response Spectrum (RRS) for the component to be qualified,
- running the engine or the genset through a predetermined seismic test cycle in an intended normal configuration of the engine or the genset and determining a Reference Response Spectrum (Ref-RS) for the component by means of at least one acceleration sensor,
- forming a seismic test configuration so that during running of the engine or the genset, the engine or the genset is subjected to at least one excitation, which is not encountered when running the engine or the genset in the normal configuration i.e. in the intended use of the genset and producing electricity at the desired frequency, and the forming of the seismic test configuration comprising modification of the resonance frequency of the engine or the genset,
- running the engine or the genset through the predetermined seismic test cycle in the seismic test configuration and determining a Test Response Spectrum (TRS) for the component to be qualified by means of the at least one acceleration sensor,
- on the basis of the Test Response Spectrum and the Reference Response Spectrum, determining a Modification Response Spectrum (MRS) representing vibrations induced by modification from the normal configuration of the engine or the genset to the seismic test configuration, and
- comparing the MRS to the RRS and in case the MRS envelops the RRS, i.e. the MRS is above the RRS in a frequency range that includes the natural frequencies of the component, the component is qualified,
- wherein the resonance frequency is modified by changing the properties of support elements that support the engine or the genset against a mounting surface.

By comparing the MRS to the RRS, the test results can be immediately verified. If the vibrations induced by the modifications of the engine or the genset do not correspond to the vibration levels that the tested component should resist, the test configuration can be modified and the test cycle can be repeated.

This speeds up the test procedure. The test can be performed simultaneously on several components of the genset.

According to an embodiment of the invention, the RRS is determined by simulating an effect of an earthquake on a finite element model of the engine or the genset and performing a Shock Response Spectrum analysis of the component to be qualified.

According to an embodiment of the invention, forming of the seismic test configuration comprises introduction of an internal and/or external excitation source. According to an embodiment of the invention, the forming of the seismic test configuration comprises introduction of an unbalance that creates a mass force in the running engine. An unbalance can be introduced, for instance, by removing or modifying one or more counterweights of the engine.

According to an embodiment of the invention, the TRS and MRS are low-pass filtered upwards from a frequency corresponding to the rotation speed of the engine when the engine is driving the generator.

### Brief description of the drawings

Embodiments of the invention are described below in more detail with reference to the accompanying drawings, in which
Fig. 1 shows an engine-generator set that is mounted on a common base frame,
Fig. 2 shows a method for seismic qualification according to an embodiment of the invention,
Fig. 3 shows an example of a Required Response Spectrum of a component to be qualified,
Fig. 4 shows a Reference Response Spectrum determined for the component,
Fig. 5 shows a Test Response Spectrum determined for the component,
Fig. 6 shows a low-pass filtered Test Response Spectrum,
Fig. 7 shows a low-pass filtered Reference Response Spectrum, and
Fig. 8 shows a comparison of a low-pass filtered Required Response Spectrum and a Modification Response Spectrum.

### Description of embodiments of the invention

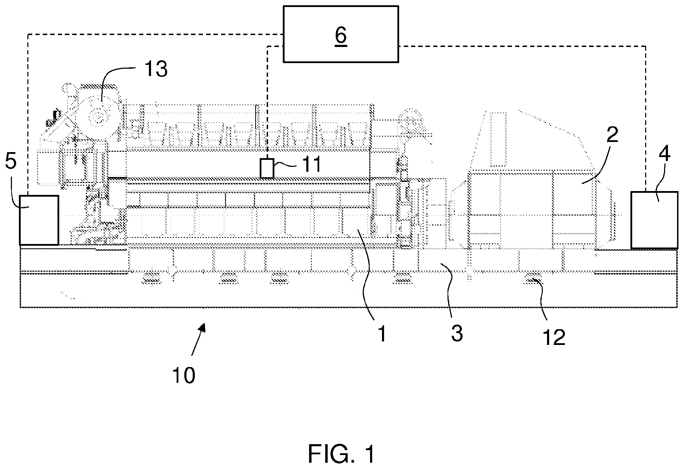

In figure 1 is shown an engine-generator set 10 (genset), which comprises an internal combustion engine 1 and a generator 2 coupled to the engine 1. The engine 1 is a piston engine. The engine 1 is a large piston engine having a rated power of at least 150 kW per cylinder and/or a cylinder bore of at least 150 mm. The engine 1 can be operated using either liquid or gaseous fuel or a combination of both. Suitable liquid fuels are, for instance, light fuel oil, heavy fuel oil or marine diesel oil. The gaseous fuel could be, for instance, natural gas. The engine 1 shown in figure 1 is a V-engine comprising 16 cylinders. However, the engine 1 could comprise any reasonable number of cylinders, and the cylinders could also be arranged in line. The engine-generator set 10 is configured to produce electricity at a predetermined frequency, for example 50 or 60 Hz. The generator 2 can be coupled to the engine 1 with any conventional coupling means. The coupling means and the rotation speed of the engine 1 are configured so that the generator 2 produces the desired frequency. In the normal use of the genset 10, the rotation speed of the engine 1 is constant. The rotation speed of the engine 1 can be for example 12.5 Hz (750 rpm) when the genset 10 produces electricity.

The genset 10 could be used, for instance, for supplying electricity to a nuclear power plant during disturbances in a power grid. The genset 10 could thus power the critical systems of a nuclear power plant when electricity is not available via the normal electrical grid. The engine 1 and the generator 2 are mounted on a common base frame 3. The base frame 3 forms a rigid platform, which supports both the engine 1 and the generator 2. The base frame 3 is supported resiliently against the ground. The genset 10 is provided with a plurality of elastic support elements 12, which are used for supporting the base frame 3 against the ground. The support elements 12 are configured to reduce transmission of vibrations from the genset 10 to the ground. The support elements 12 also reduce transmission of vibrations from the ground to the genset 10, for example during an earthquake. The support elements 12 are configured to have certain resilience and damping properties that are suitable for the intended normal operating conditions of the genset 10. For instance, the properties of the support elements 12 affect the resonance frequencies of the genset 10, and the support elements 12 should be configured so that the resonance frequencies do not correspond to the normal rotation speed of the engine 1.

The genset configuration described above is a normal configuration, which is suitable for the normal operation of the genset 10. The expression "normal operation" refers to the intended use of the genset 10. It is thus the operation of the genset 10 for producing electricity at the desired frequency.

A method of verifying functioning of the engine 1, the whole genset 10 and/or the various components of the engine 1 and the generator 2 during and/or after an earthquake, i.e. a method for seismic qualification, is described next. In the method for seismic qualification, the behavior of the components of the genset 10 when the components experience abnormal vibrations is tested. For carrying out the test, the engine 1 is operated and simultaneously subjected to at least one excitation that is not encountered during the normal operation of the engine 1. For subjecting the engine 1 to excitations, the genset 10 is modified to a seismic test configuration. An excitation can be either internal or external and it is configured to induce vibrations in the engine 1 and/or in the genset 10. The modification of the genset 10 to the seismic test configuration can thus include internal and/or external changes to the genset 10. The operation of the engine 1 means running of the engine 1 according to a certain pattern, which is hereinafter also called as a seismic test cycle. During the test, the rotation speed of the engine 1 can be constant or varying. The rotation speed can be adjusted to induce desired excitations, or the engine 1 can go through a certain test procedure, which can include different speeds and/or loads. By means of the method for seismic qualification, the effects of an earthquake on the engine 1, generator 2 and different auxiliaries of the engine 1 can thus be simulated.

The expression "internal excitation" refers to a modification in the construction or operation of the engine 1 that causes unbalanced forces or torques not encountered during the normal operation of the engine 1. The expression "external excitation" refers to an excitation that is caused by an external excitation source. In order to cause forces having the desired direction and a magnitude that falls within a desired range, several internal and/or external excitations can be combined. The excitations are configured to cause such vibrations in the engine 1, the generator 2 and/or the auxiliaries of the engine 1, which simulate the vibrations caused by an earthquake. Depending on the geographical location where the engine 1 is to be used, the required excitations may be different. If the engine 1 is going to be used in an area with high seismic activity, it has to tolerate higher accelerations than an engine that is used in a more stable location. Also the intended use of the engine 1 may influence the required earthquake resistance. For instance, in certain applications it may be adequate that the engine 1 maintains its operability during and/or after an earthquake that is likely to occur once during a period of ten years, but in some applications the engine 1 may need to maintain its operability during and/or after any imaginable earthquake.

Internal excitations can be generally generated by unbalancing one or more rotating masses of the engine 1 or by modifying the power outputs of selected cylinders of the engine 1. Rotating masses of the engine 1 include, for instance, the crankshaft and the camshaft. The crankshaft of a piston engine 1 is usually provided with counterweights, which compensate the weight of the crank webs and crankpins. One way of unbalancing the rotating parts of the engine 1 is to remove one or more of the counterweights of the crankshaft. Alternatively or additionally, one or more of the counterweights could be replaced by a lighter or heavier counterweight or additional counterweights could be attached to the crankshaft. However, it is simpler to remove the counterweights than manufacture different counterweights to replace or supplement existing counterweights.

Another way of unbalancing the rotating parts of the engine 1 is to attach one or more unbalancing masses to rotating parts that are connected to the crankshaft. For instance, the genset 10 could be provided with an unbalancing mass that is attached to a flywheel of the engine 1.

Instead or in addition to the unbalancing of the crankshaft, a camshaft of the engine 1 can be unbalanced for causing internal excitations. For instance, an unbalancing mass could be attached to the camgear of the engine 1. In a four stroke engine 1, the rotation speed of the camshaft is half of the rotation speed of the crankshaft. By unbalancing the camshaft, mass forces with different frequency can thus be created.

Internal excitations can also be created by modifying the power outputs of certain cylinders of the engine 1. By having a different power output in one or in a few cylinders, abnormal vibrations can be induced. The modification of power outputs can be implemented, for instance, by disabling ignition in one or more cylinders. In a spark ignition engine, the functioning of spark plugs can be disabled in selected cylinders. In a compression ignition engine, the fuel injection into selected cylinders can be disabled. The genset 10 could be further provided with external devices that are driven by the engine 1 and configured to create excitations of higher order. The devices can be gears mounted on the engine 1 or on the base frame 3.

The benefits of using internal excitations include that the testing is easy and inexpensive. In the simplest form, the testing can be done by removing some counterweights of the engine 1 and/or by configuring the control unit of the engine 1 to implement modified power outputs of certain cylinders. Also additional unbalancing masses are an easy and inexpensive way for inducing excitations.

A drawback of using only internal excitations for testing the earthquake resistance of the engine 1 is that no axial excitations can be produced. Also, the magnitude of the accelerations is limited and it is not possible to run a normal testing procedure of the engine 1 simultaneously with the earthquake resistance testing. For creating also axial excitations and producing higher accelerations, the internal excitations can be replaced or supplemented by external excitations.

For creating external excitations, the genset 10 of figure 1 is provided with two external excitation sources 4, 5. A first external excitation source 4 is configured to cause forces in the transversal direction of the genset 10 and a second external excitation source 5 is configured to cause forces is the longitudinal direction of the genset 10. In the embodiment of figure 1, the first external excitation source 4 is arranged at the generator end of the genset 10 and the second external excitation source 5 is arranged at the free end of the engine 1. Compared to a standard base frame, the base frame 3 used in the test arrangement has been modified by increasing its length to accommodate the external excitation sources 4, 5. Instead of mounting the excitation sources 4, 5 on the base frame 3, the excitation sources 4, 5 could be arranged on the ground and configured to cause excitations by directing forces to the base frame 3 or directly to the engine 1 or the generator 2.

The external excitation sources 4, 5 can be, for instance, vibration compensators. A vibration compensator is a device, which is designed to deliver a cyclic force with a certain frequency and direction. Vibration compensators can be used for instance in ships for delivering counterforces compensating the forces created by the engines and propellers. A vibration compensator typically comprises a number of rotating masses, which are driven by an electric motor. The masses can be adjusted to provide the required counterforce. The motor is synchronized with the main engine of the ship in order to maintain the appropriate phase difference between the force created by the vibration source and the counterforce provided by the vibration compensator. The use of vibration compensators as the external excitation sources 4, 5 has the benefit that vibration compensators are readily available and can be easily configured for the use as excitation sources.

When the earthquake resistance of the engine 1 is tested, the engine 1 is operated coupled to the generator 2. If only internal excitation is used, the rotation speed of the engine 1 needs to be adapted to induce the desired excitations. If the test arrangement is provided with external excitation sources 4, 5, the engine 1 can be operated using the desired rotation speed and load. For instance, the engine 1 can go through a normal factory acceptance test procedure simultaneously with the earthquake testing. The test arrangement is provided with a control unit 6, which is connected to the external excitation sources 4, 5 for controlling the rotation speeds of the external excitations sources 4, 5. The test arrangement is further provided with an acceleration sensor 11, which is configured to monitor the vibrations of the engine 1. The control unit 6 is connected to the acceleration sensor 11. The vibrations induced by the excitations can thus be analyzed. The genset 10 can be provided with a plurality of acceleration sensors 11. Each component to be qualified for earthquake resistance can be provided with an own acceleration sensor 11 or even with several acceleration sensors 11.

Since the engine 1 and the generator 2 are arranged on a common base frame 3, the operation of the whole genset 10 can be tested simultaneously. Also the auxiliaries of the engine 1 that are attached to the engine 1, such as the turbocharger 13 or the lubricating oil pump, experience the forces created by the internal or external excitations. Also the functioning of the auxiliaries can thus be verified in connection with the testing of the genset 10. Preferably the base frame 3 is configured to accommodate different engine sizes to allow the same base frame 3 to be used for different engines 1 and gensets 10.

The method described above simulates the accelerations induced by an earthquake. However, the accelerations experienced by different components of the genset 10 do not perfectly correspond to the accelerations experienced during a real earthquake. For ensuring that each component to be tested actually meets the requirements set for the component, the method for seismic qualification comprises further steps, which allow verification of the results.

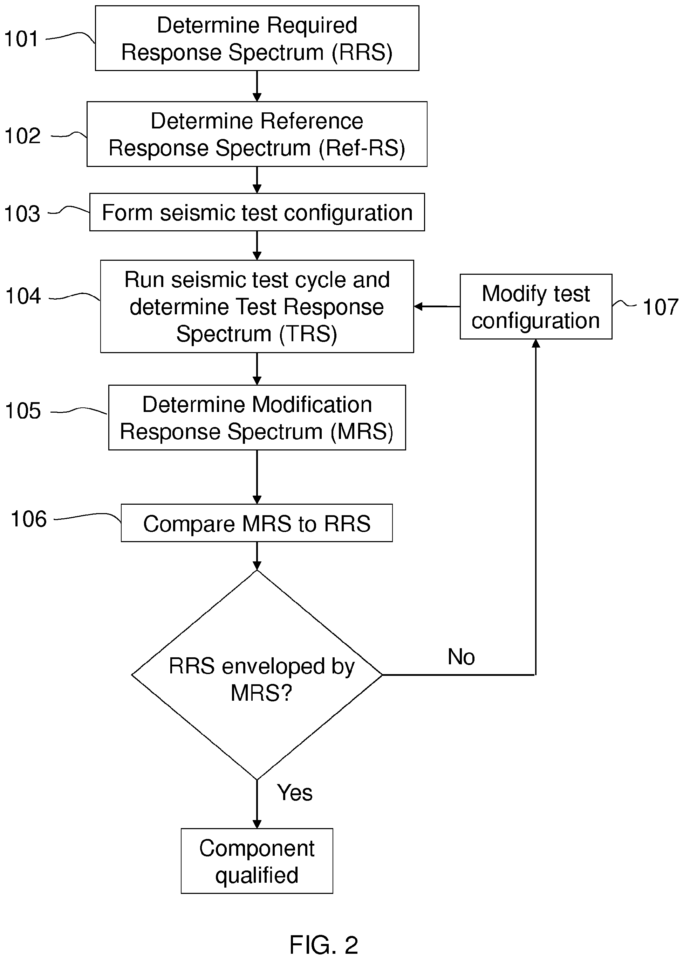

Figure 2 shows as a flowchart the method according to an embodiment of the invention. In the following, a method for seismic qualification of one component of the engine 1 or the genset 10 is described. However, several components of the genset 10 can be tested simultaneously in the same way.

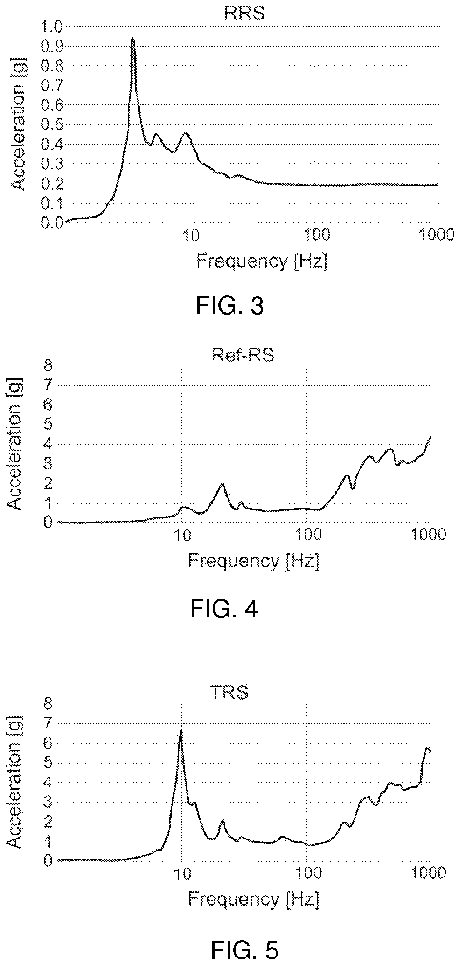

In a first step 101 of the method, a Required Response Spectrum (RRS) for the component to be qualified is determined. The Required Response Spectrum refers to the accelerations the component should resist during and after an earthquake. The RRS is determined by simulation. A finite element (FE) model of the genset 10 is created. In case of a genset 10, which is to be used at a nuclear power plant, the magnitude and duration of earthquakes that the genset 10 should resist is determined by the relevant authorities. A simulation of such an earthquake is applied to the FE model of the genset 10. A Shock Response Spectrum (SRS) Analysis is then performed on the component to be qualified to obtain the RSS. Figure 3 shows an example of the Required Response Spectrum of a component. The RSS represents the vibrations induced by an earthquake and does not take into account the accelerations caused by the running of the genset 10.

In a second step 102 of the method, a Reference Response Spectrum (Ref-RS) for the component is determined. The Ref-RS is determined by running the genset 10 through a predetermined seismic test cycle in the intended normal configuration of the genset 10. The Ref-RS represents the accelerations caused by the running of the engine 1. Each component to be qualified is provided with one or more acceleration sensors 11 that measure the accelerations experienced by the component during the test cycle. Figure 4 shows an example of a Reference Response Spectrum of a component.

In a third step 103 of the method, the genset 10 is modified to a seismic test configuration. In the seismic test configuration, operation of the genset 10 subjects the genset 10 to at least one excitation, which is not encountered when the genset 10 is operated in the normal configuration. Some possible modifications that can be made have been described above. The modifications can be internal and/or external. The modifications can thus include changes in the components of the genset 10 and/or additions of external vibration sources. The modifications can comprise, for instance, introduction of an unbalance that creates a mass force in a running engine 1. An unbalance can be introduced by removing or modifying one or more counterweights of the engine 1. In addition, in the seismic test configuration, the resonance frequency of the genset 10 can be changed. The resonance frequency can be changed for example by modifying the properties of the support elements 12 of the genset 10. The support elements 12 used in the normal configuration of the genset 10 can be replaced by different support elements or the properties of the support elements 12 can be modified in some other way.

In a fourth step 104 of the method, the genset 10 is run through the predetermined seismic test cycle in the seismic test configuration. During the test cycle, a Test Response Spectrum (TRS) for the component to be qualified is determined. One or more acceleration sensors 11 are used for measuring the vibrations experienced by the component. Figure 5 shows an example of a Test Response Spectrum of a component. The TRS includes both the accelerations induced by the running of the genset 10 in the normal configuration (Ref-RS) and the accelerations induced by the modification of the genset 10 from the normal configuration to the seismic test configuration. The latter is referred to as a Modification Response Spectrum (MRS).

In a fifth step 105 of the method, the Modification Response Spectrum is determined on the basis of the Test Response Spectrum and the Reference Response Spectrum. The TRS is the sum of the contributions of the Ref-RS and the MRS, and the MRS can thus be determined by eliminating the effect of the Ref-RS on the TRS.

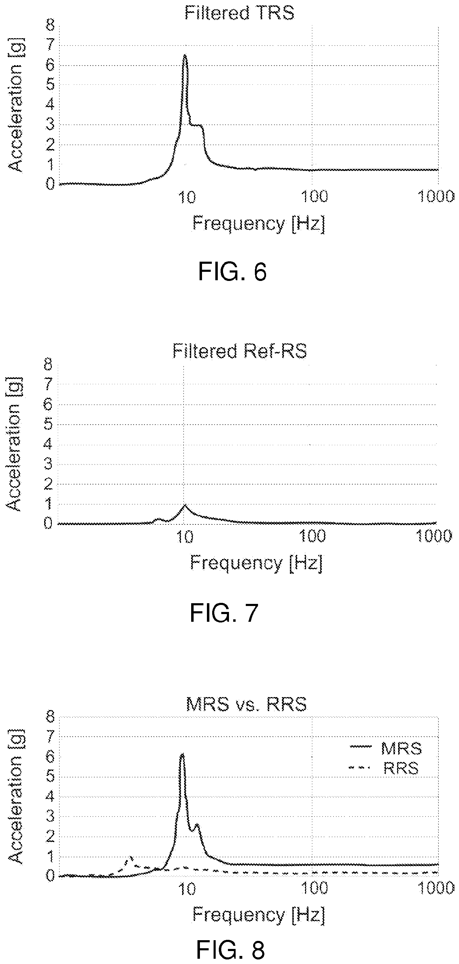

For deducting the Ref-RS from the TRS, both spectra are low-pass filtered. The same filtering technique is applied on both spectra in order to ensure that the filtered data sets are comparable. The data is filtered upwards from a frequency representing the rotation speed of the engine 1 as the engine 1 drives the generator 2. For instance, if the genset 10 is configured to produce electricity with the desired frequency with engine speed of 12.5 Hz (750 rpm), the data is low-pass filtered from 12.5 Hz upwards. The filtering of both spectra is performed on corresponding time histories. Figure 6 shows an example of a low-pass filtered TRS of a component. Figure 7 shows an example of a low-pass filtered Ref-RS of a component. After the filtering of the spectra, the Ref-RS can be deducted from the TRS. The result is the MRS.

In a sixth step 106 of the method, the MRS is compared to the RRS. Figure 8 shows a comparison of the low-pass filtered MRS and the low-pass filtered RRS of a component. In case the MRS envelops the RRS, i.e. the MRS is above the RRS in a frequency range that includes the natural frequencies of the component, the component is qualified. On the other hand, if the comparison of the MRS and the RRS reveals that the RRS is not enveloped by the MRS, the seismic test configuration can be further modified in a seventh step 107. For instance, the excitations can be increased by increasing the unbalance of the engine 1, or the resonance frequency of the genset 10 can be changed. After modifying the test configuration, the seismic test cycle can be run again and the fifth step 105 and the sixth step 106 can be repeated. The method according to the invention gives an instant feedback regarding whether the components are qualified or whether changes to the test are needed.

It will be appreciated by a person skilled in the art that the invention is not limited to the embodiments described above, but may vary within the scope of the appended claims.

## Claims

1. A method for seismic qualification of a component of a piston engine (1) or a component of a genset (10) that comprises a piston engine (1) and a generator (2) coupled to the engine (1), the method comprising the steps of
- determining a Required Response Spectrum, RRS, for the component to be qualified (101),
- running the engine (1) or the genset (10) through a predetermined seismic test cycle in an intended normal configuration of the engine or the genset and determining a Reference Response Spectrum, Ref-RS, for the component by means of at least one acceleration sensor (11) (102),
- forming a seismic test configuration so that during running of the engine (1) or the genset (10), the engine (1) or the genset (10) is subjected to at least one excitation, which is not encountered when running the engine (1) or the genset (10) in the normal configuration (103) i.e. in the intended use of the genset and producing electricity at the desired frequency, and the forming of the seismic test configuration comprising modification of the resonance frequency of the engine (1) or the genset (10),
- running the engine (1) or the genset (10) through the predetermined seismic test cycle in the seismic test configuration and determining a Test Response Spectrum, TRS, for the component to be qualified by means of the at least one acceleration sensor (11) (104),
- on the basis of the Test Response Spectrum and the Reference Response Spectrum, determining a Modification Response Spectrum, MRS, representing vibrations induced by modification from the normal configuration of the engine (1) or the genset (10) to the seismic test configuration (105), and
- comparing the MRS to the RRS (106) and in case the MRS envelops the RRS, i.e. the MRS is above the RRS in a frequency range that includes the natural frequencies of the component, the component is qualified,
- wherein the resonance frequency is modified by changing the properties of support elements (12) that support the engine (1) or the genset (10) against a mounting surface.

2. A method according to claim 1, wherein the RRS is determined by simulating an effect of an earthquake on a finite element model of the engine (1) or the genset (10) and performing a Shock Response Spectrum analysis of the component to be qualified.

3. A method according to claim 1 or 2, wherein the forming of the seismic test configuration comprises introduction of an internal and/or external excitation source.

4. A method according to any of the preceding claims, wherein the forming of the seismic test configuration comprises introduction of an unbalance that creates a mass force in the running engine (1).

5. A method according to claim 4, wherein the unbalance is introduced by removing or modifying one or more counterweights of the engine (1).

6. A method according to any of the preceding claims, wherein the TRS and MRS are low-pass filtered upwards from a frequency corresponding to the rotation speed of the engine (1) when the engine (1) is driving the generator (2).

## Patentansprüche

1. Verfahren zur seismischen Qualifizierung einer Komponente eines Kolbenmotors (1) oder einer Komponente eines Aggregats (10), das einen Kolbenmotor (1) und einen mit dem Motor (1) gekoppelten Generator (2) umfasst, das Verfahren umfassend die folgenden Schritte
- Bestimmen eines erforderlichen Antwortspektrums, RRS, für die zu qualifizierende Komponente (101);
- Laufenlassen des Motors (1) oder des Aggregats (10) durch einen vorbestimmten seismischen Testzyklus in einer beabsichtigten normalen Konfiguration des Motors oder des Aggregats und Bestimmen eines Referenzantwortspektrums, Ref-Rs, für die Komponente mittels mindestens eines Beschleunigungssensors (11) (102),
- Bilden einer seismischen Testkonfiguration, so dass während des Betriebs des Motors (1) oder des Aggregats (10) der Motor (1) oder das Aggregat (10) mindestens einer Anregung ausgesetzt ist, die beim Laufenlassen des Motors (1) oder des Aggregats (10) in der normalen Konfiguration nicht auftritt (103), z.B. bei der beabsichtigten Verwendung des Aggregats und Erzeugung von Elektrizität mit der gewünschten Frequenz, und wobei das Bilden der seismischen Testkonfiguration Modifizieren der Resonanzfrequenz des Motors (1) oder des Aggregats (10) umfasst,
- Laufenlassen des Motors (1) oder des Aggregats (10) durch den vorbestimmten seismischen Testzyklus in der seismischen Testkonfiguration und Bestimmen eines Testantwortspektrums, TRS, für die zu qualifizierende Komponente mittels des mindestens einen Beschleunigungssensors (11 (104),
- auf der Grundlage des Testantwortspektrums und des Referenzantwortspektrums, Bestimmen eines Modifikationsantwortspektrums, MRS, das Vibrationen darstellt, die durch das Modifizieren von der normalen Konfiguration des Motors (1) oder des Aggregats (10) zur seismischen Testkonfiguration induziert werden (105), und
- Vergleichen des MRS mit dem RRS (106) und falls das MRS das RRS umhüllt, d.h. das MRS in einem Frequenzbereich, der die Eigenfrequenzen der Komponente enthält, über dem RRS liegt, die Komponente qualifiziert wird,
- wobei die Resonanzfrequenz durch Ändern der Eigenschaften der Stützelemente (12), die den Motor (1) oder das Aggregat (10) gegen eine Montagefläche stützen, geändert wird.

2. Verfahren nach Anspruch 1, wobei das RRS durch Simulieren einer Auswirkung eines Erdbebens auf ein Finite-Elemente-Modell des Motors (1) oder des Aggregats (10) und Durchführen einer Stoßantwortspektrumanalyse der zu qualifizierenden Komponente bestimmt wird.

3. Verfahren nach Anspruch 1 oder 2, wobei das Bilden der seismischen Testkonfiguration das Einführen einer internen und/oder externen Anregungsquelle umfasst.

4. Verfahren nach einem der vorhergehenden Ansprüche, wobei das Bilden der seismischen Testkonfiguration das Einbringen einer Unwucht umfasst, die eine Massenkraft in dem laufenden Motor (1) erzeugt.

5. Verfahren nach Anspruch 4, wobei die Unwucht durch Entfernen oder Modifizieren eines oder mehrerer Gegengewichte des Motors (1) eingeführt wird.

6. Verfahren nach einem der vorhergehenden Ansprüche, wobei das TRS und MRS von einer der Drehzahl des Motors (1) entsprechenden Frequenz nach oben tiefpassgefiltert werden, wenn der Motor (1) den Generator (2) antreibt.

## Revendications

1. Procédé de qualification sismique d'un composant d'un moteur (1) à piston ou d'un composant d'un groupe électrogène (10) qui comprend un moteur (1) à piston et un générateur (2) couplé au moteur (1), le procédé comprenant les étapes de
- détermination d'un spectre de réponse exigé, RRS, pour le composant à qualifier (101),
- fonctionnement du moteur (1) ou du groupe électrogène (10) pendant un cycle de test sismique prédéterminé dans une configuration normale prévue du moteur ou du groupe électrogène et la détermination d'un spectre de réponse de référence, Ref-RS, pour le composant au moyen d'au moins un capteur d'accélération (11) (102),
- formation d'une configuration de test sismique de manière à ce que, pendant le fonctionnement du moteur (1) ou du groupe électrogène (10), le moteur (1) ou le groupe électrogène (10) est soumis à au moins une excitation, qui n'est pas rencontrée lors du fonctionnement du moteur (1) ou du groupe électrogène (10) dans la configuration normale (103) c'est-à-dire dans l'utilisation prévue du groupe électrogène et la production d'électricité à la fréquence souhaitée, et la formation de la configuration de test sismique comprenant la modification de la fréquence de résonance du moteur (1) ou du groupe électrogène (10),
- fonctionnement du moteur (1) ou du groupe électrogène (10) pendant le cycle de test sismique prédéterminé dans la configuration de test sismique et de détermination d'un spectre de réponse de test, TRS, pour le composant à qualifier au moyen de l'au moins un capteur d'accélération (11) (104),
- sur la base du spectre de réponse de test et du spectre de réponse de référence, détermination d'un spectre de réponse de modification, MRS, représentant des vibrations induites par la modification de la configuration normale du moteur (1) ou du groupe électrogène (10) à la configuration de test sismique (105), et
- comparaison du MRS au RRS (106) et dans le cas où le MRS enveloppe le RRS, c'est-à-dire que le MRS est au-dessus du RRS dans une plage de fréquences qui inclut les fréquences naturelles du composant, le composant est qualifié,
- dans lequel la fréquence de résonance est modifiée en changeant les propriétés d'éléments de support (12) qui supportent le moteur (1) ou le groupe électrogène (10) contre une surface de montage.

2. Procédé selon la revendication 1, dans lequel le RRS est déterminé en simulant un effet d'un tremblement de terre sur un modèle d'éléments finis du moteur (1) ou du groupe électrogène (10) et en effectuant une analyse du spectre de réponse à un choc du composant à qualifier.

3. Procédé selon la revendication 1 ou 2, dans lequel la formation de la configuration de test sismique comprend l'introduction d'une source d'excitation interne et/ou externe.

4. Procédé selon l'une quelconque des revendications précédentes, dans lequel la formation de la configuration de test sismique comprend l'introduction d'un déséquilibre qui crée une force de masse dans le moteur (1) en fonctionnement.

5. Procédé selon la revendication 4, dans lequel le déséquilibre est introduit en supprimant ou en modifiant un ou plusieurs contrepoids du moteur (1).

6. Procédé selon l'une quelconque des revendications précédentes, dans lequel le TRS et le MRS sont filtrés passe-bas vers le haut à partir d'une fréquence correspondant à la vitesse de rotation du moteur (1) lorsque le moteur (1) entraîne le générateur (2).
